# EUROPEAN PATENT SPECIFICATION

(11) **EP 1 722 033 B1**
(45) Date of publication and mention of the grant of the patent: **24.08.2011**
(21) Application number: 06005308.9
(22) Date of filing: 15.03.2006
(51) Int. Cl.: D21F 7/08

(54) **Papermaker's press felt with long machine direction floats in base fabric**
Papiermaschinenpressfilz mit langen Längsflottierungen im Grundgewebe
Feutre de presse d'une machine à papier comportant un tissu de base dont les fils sens machine forment de longs flottés

(30) Priority: 21.03.2005 US 84899; 31.03.2005 US 95008
(43) Date of publication of application: 15.11.2006
(60) Divisional application: 10181074.5
(73) Proprietor: Huyck Austria Ges. m.b.H., 2640 Gloggnitz (AT)
(72) Inventor: Gstrein, Hippolit, 2640 Gloggnitz (AT); Haiden, Klaus, 2620 Neunkirchen (AT)
(74) Representative: Popp, Eugen

(56) References cited:
- EP-A- 0 549 917
- WO-A-93/01350

## Description

### Field of the Invention

The present invention relates generally to papermaking, and more particularly to fabrics used in papermaking.

### Background of the Invention

In the conventional fourdrinier papermaking process, a water slurry or suspension of cellulosic fibers (known as the paper "stock") is fed onto the top of the upper run of an endless belt of woven wire and/or synthetic material that travels between two or more rollers. The belt, often referred to as a "forming fabric," .provides a papermaking surface on the upper surface of its upper run which operates as a filter to separate the cellulosic fibers of the paper stock from the aqueous medium, thereby forming a wet paper web. The aqueous medium drains through mesh openings of the forming fabric, known as drainage holes, by gravity alone or with assistance from one or more suction boxes located on the lower surface (i.e., the "machine side") of the upper run of the fabric.

After leaving the forming section, the paper web is transferred to a press section of the paper machine, in which it is passed through the nips of one or more pairs of press rolls covered with another fabric, typically referred to as a "press felt." Pressure from the rolls removes additional moisture from the web; the moisture removal is often enhanced by the presence of a "batt" layer on the press felt. The paper is then conveyed to a drier section for further moisture removal. After drying, the paper is ready for secondary processing and packaging.

Press felts typically include one or more base fabric layers along with one or more batt layers. The base fabrics can be single or multilayer designs, although recently conventional fabrics have often been replaced with laminated fabric designs, which can include, for example, a fine top fabric for enhanced pressure transfer uniformity and a more open bottom fabric design for improved dewatering. Most commonly, laminated base fabrics comprise two single layer fabrics needled together, although double layer fabrics may also be used. Even three or more fabric layers may be employed in some fabrics (see, e.g., U.S. Patent No. 5,277,967 to Zehle et al.
). These fabrics have typically been woven on 12 and 16 shed patterns such as plain weaves or twills or 6 harness satins. However, these fabrics often suffer from increased start-up time.

Other advances in press felt design have incorporated non-woven base layers. Exemplary of these are spiraled fabrics, such as those described in U.S. Patent No. 6,240,608 and U.S. Patent Publication No. 20040005833 Non-woven fabrics can enjoy as an advantage the absence of a knuckle on the top surface of the fabric that can negatively impact paper marking. However, these fabrics can tend to suffer from hydraulic marking and collapsing under high loadings.

International Patent Publication No. WO 93/01350 discloses a press felt having at least two distinct layers of vertically stacked, flattened monofilament warp yarns. European Patent Application No. 0549917 discloses a paper maker's felt having a dual layer base fabric with a high absorption capacity, wherein the weave pattern has twice as many machine direction yarns on the top side of the fabric as on the bottom side of the fabric.

In view of the foregoing, it would be desirable to provide a base fabric for a press felt that overcomes some of the shortcomings of spiraled fabrics at a lower start-up period than a laminated base fabric.

### Summary of the Invention

The present invention provides a papermaker's press felt in accordance with independent claim 1. Preferred embodiments of the invention are reflected in the dependent claims.

The present invention can overcome some of the shortcomings of prior press felts. According to the present invention, the papermaker's press felt, comprises: a base fabric, comprising: a set of top machine direction (MD) yarns; a set of bottom MD yarns; and a set of cross machine direction (CMD) yarns interwoven with the top MD yarns and the bottom MD yarns. The top MD yarns, bottom MD yarns, and CMD yarns are interwoven in a series of repeat units in which each top MD yarn forms a long MD paper side float that passes above 11 consecutive ones of the set of CMD yarns. The press felt further comprises at least one batt layer attached to the base fabric. In this configuration, the long paper side floats of the base fabric can provide a desirable balance of properties.

### Brief Description of the Figures

**Figure 1** is a schematic diagram illustrating the press section of a papermaking machine that may employ a press felt according to embodiments of the present invention.

**Figure 2** is a cross-sectional view of a press felt according to embodiments of the present invention.

**Figure 3** is a top view of a base fabric of the press felt of **Figure 1****.**

**Figure 4** is a top view of the bottom layer of the base fabric of **Figure 3****.**

**Figures 5A-5L** are section views taken along lines **5A-5A** through **5L― 5L** of **Figure 3****.**

Figure 6 is a section view of a base fabric according to alternative embodiments of the present invention.

**Figure 7** is a section view of a base fabric according to alternative embodiments of the present invention.

**Figure 8** is a section view of a base fabric according to alternative embodiments of the present invention.

**Figure 9** is a section view of a base fabric according to alternative embodiments of the present invention.

**Figure 10** is a top view of a triple layer base fabric according to alternative embodiments of the invention.

**Figure 11** is a top view of the bottom layer of the fabric of Figure 11.

**Figure 12** is a section view of the base fabric taken along lines **13―13** of Figure 11.

**Figure 13** is a section view of a base fabric according to alternative embodiments of the present invention.

**Figure 14** is a section view of a base fabric according to alternative embodiments of the present invention.

**Figure 15** is a top view of a triple layer base fabric according to alternative embodiments of the invention.

**Figure 16** is a top view of the bottom layer of the fabric of Figure **15**.

**Figure 17** is a section view of the base fabric of **Figure 15** taken along lines **22―22** thereof.

**Figure 18** is a section view of a base fabric according to alternative embodiments of the present invention.

**Figure 19** is a section view of a base fabric according to alternative embodiments of the present invention.

**Figure 20** is a section view of a base fabric according to alternative embodiments of the present invention.

### Detailed Description of Embodiments of the Invention

The present invention will now be described more fully hereinafter, in which embodiments of the invention are shown. This invention may, however, be embodied in different forms and should not be construed as limited to the embodiments set forth herein. Rather, these embodiments are provided so that this disclosure will be thorough and complete, and will fully convey the scope of the invention to those skilled in the art. In the drawings, like numbers refer to like elements throughout. Thicknesses and dimensions of some components may be exaggerated for clarity.

As used herein, the terms "machine direction" (MD) and "cross machine direction" (CMD) refer, respectively, to a direction aligned with the direction of travel of the papermakers' fabric on a papermaking machine, and a direction parallel to the fabric surface and transverse to the direction of travel. Also, both the flat weaving and endless weaving methods described hereinabove are well known in this art, and the term "endless belt" as used herein refers to belts made by either method.

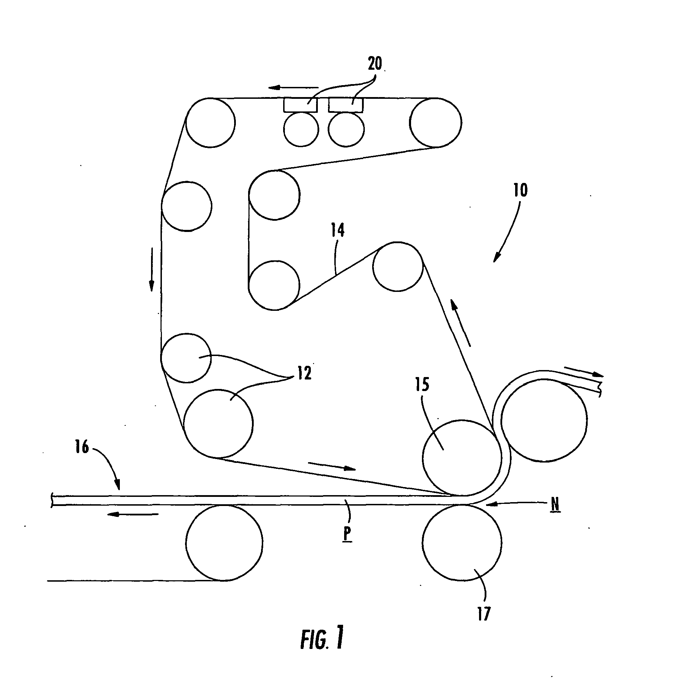

Referring now to the figures, a papermaking machine press section, designated broadly at **10,** is illustrated in **Figure 1****.** The press section **10** includes a press felt **14** that is installed upon and conveyed by a set of rolls **12.** In its travel, the felt **14** travels over a press roll **15.** An opposed press roll **17** is positioned so that, in conjunction with the felt **14** and press roll **15,** it forms a nip N between the press rolls **15** and **17.**

In operation, a paper web P is conveyed from a forming section 16 through the nip N formed by the press rollers **15, 17,** wherein pressure is applied to the paper web P by the press rolls **15, 17.** The pressure forces moisture from the paper web P that is absorbed by the felt **14.** As the felt **14** is conveyed around its roll set **12,** moisture is removed from the felt **14** and conditioned by one or more suction boxes **20.**

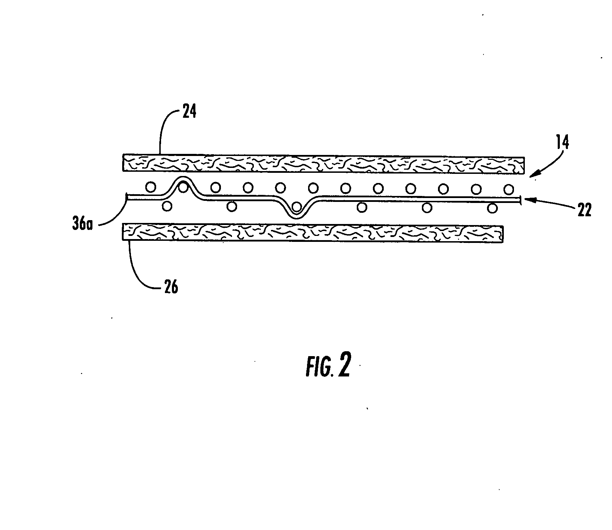

**Figure 2** illustrates a cross-section of the felt **14.** As can be seen in the aforementioned figures, the felt **14** includes a base fabric layer **22** (described in much greater bdetail below) and two batt layers: a machine side batt layer **24** and a paper side batt layer **26.** Illustratively and preferably, these batt layers **24, 26** are attached to the base fabric layer **22** through a needling process, although other attachment techniques, such as heat bonding and adhesives, can also be used with the present invention. The machine side and paper side batt layers **24, 26** should be formed of material, such as a synthetic fiber like acrylic, aramid, polyester, or nylon, or a natural fiber such as wool, that assists in wicking water away from the base fabric layer **22.** Preferred materials for the batt layers **24, 26** include polyamide, polyester and blends thereof. The weight and thickness of the batt layers **24, 26** can vary, although it is preferable that the ratio of batt weight to fabric weight is about between about 0.5 and 2.0, with 1.0 being more preferred. Also, in some embodiments, it may be desirable to have additional batt layers or to omit either of the batt layers **24, 26.**

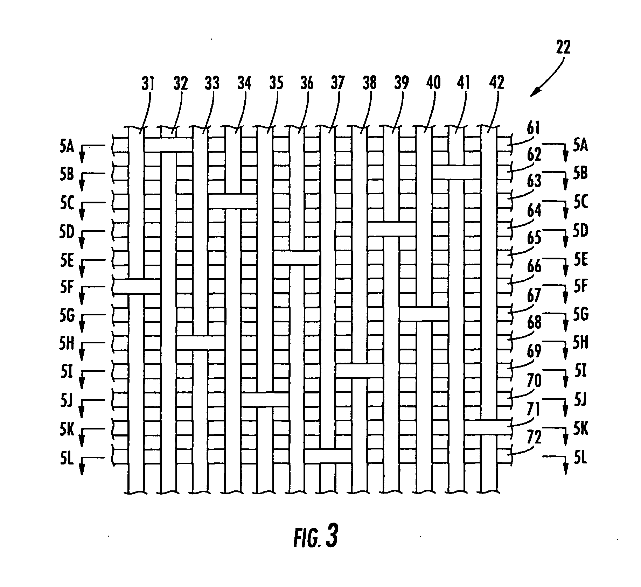

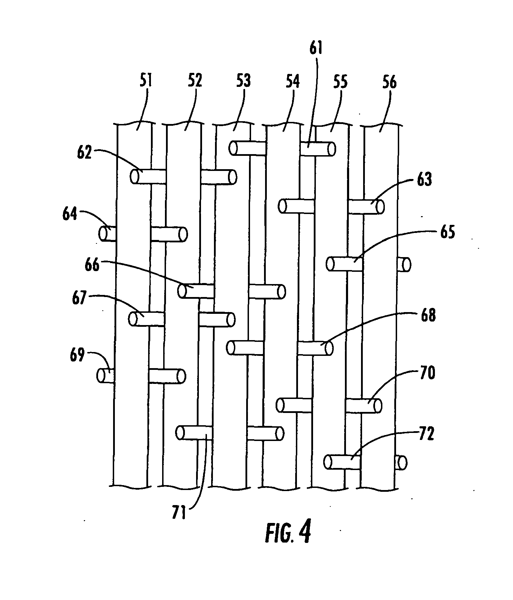

**Figure 3** illustrates a repeat unit of the top, or papermaking, surface of the' duplex base fabric 22, and **Figure 4** illustrates a corresponding repeat unit the bottom layer of the base fabric **22** as seen from above. The base fabric **22** includes twelve top MD yarns **31-42,** six bottom MD yarns **51-56,** and twelve CMD yarns **61-72.** The interweaving of these yarns is described below.

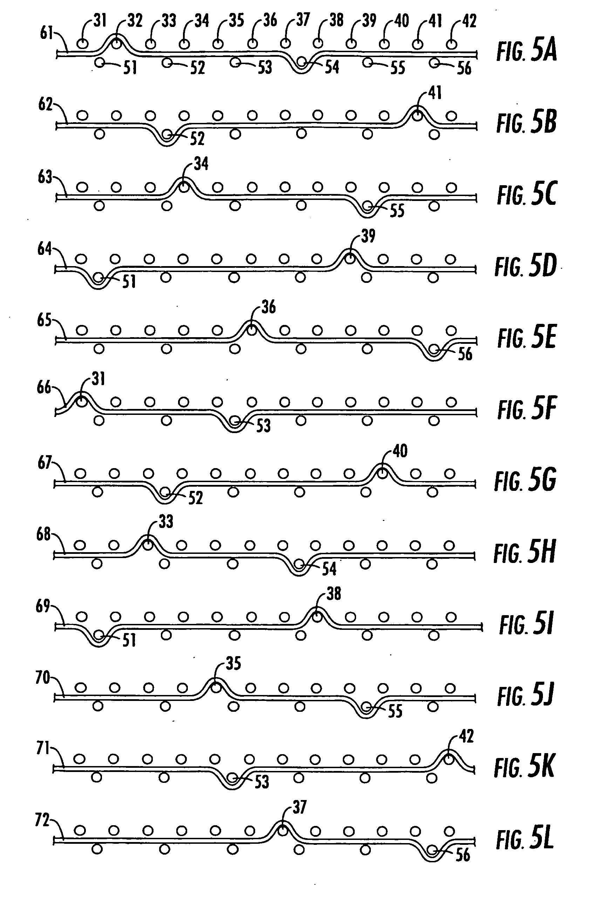

As can be seen in **Figures 5A-5L**, each of the CMD yarns **61-72** interweaves in an "over 1/under 11" pattern with respect to the top MD yarns **31-42.** For example, CMD yarn **66** passes over top MD yarn **31,** then passes below each of the other top MD yarns **32-42.** Within the same weaving sequence, each CMD yarn **61-72** also interweaves in an "over 5/under 1" pattern with the bottom MD yarns **51-56.** This is exemplified by CMD yarn **66,** which passes above bottom MD yarns **51** and **52,** below bottom MD yarn **53,** and above bottom MD yarns **54-56** (bottom yarns **51, 52** and **54-56** are consecutive in adjoining repeat units and combine to form the "over 5 portion of the CMD yarn sequence). In the embodiment illustrated in **Figures 5A-5L****,** each CMD yarn, after passing over a top MD yarn, follows one of two paths. In the case of CMD yarns **61, 63, 65, 67, 69, 71,** each of these CMD yarns passes under the next five adjacent top MD yarns and over the next two adjacent bottom MD yarns before passing below a bottom MD yarn as part of the weaving pattern. Thus, CMD yarn **61** passes over top MD yarn **32,** then passes below top MD yarns **33-37** as it passes over bottom MD yarns **52** and **53,** then passes below bottom MD yarn **54** before passing above the remaining bottom MD yarns and the below the remaining top MD yarns. In the case of CMD yarns **62, 64, 66, 68, 70, 72,** each of these CMD yarns passes below the next four top MD yarns and the next two bottom CMD yarns before passing below a bottom MD yarn. Thus, CMD yarn 66 passes over top MD yarn 31, below top MD yarns **32-35** as it passes over bottom MD yarns 51 and 52, then passes below bottom MD yarn **53** before passing above the remaining bottom MD yarns and below the remaining top MD yarns. The offset between adjacent CMD yarns is between 3 and 7 top MD yarns, with the offset typically being an odd number of top MD yarns.

Returning now to **Figure 3****,** it can be observed that the top surface of the fabric **22** includes long MD floats ("floats" are segments of yarns that pass either entirely over or entirely under multiple adjacent perpendicular yarns; therefore, "MD floats" are segments of MD yarns that pass either entirely over or under multiple adjacent CMD yarns). As used herein, "long MD floats" are MD floats that pass over or under at least five consecutive CMD yarns. "Long paper side MD floats" are long MD floats that pass over at least five consecutive CMD yarns on the papermaking surface, and "long machine side MD floats" are MD floats that pass under at least five consecutive CMD yarns on the machine surface of the fabric.

The use of the base fabric **22** in the felt **14** can provide a desirable balance of properties. Felts with such base fabrics can exhibit sound sheet quality and consistent operability. The long paper side MD floats can provide uniform pressure support to the paper sheet, which can result in improved sheet quality and high drainage performance. On the machine side of the fabric, long MD floats can reduce the effect of "false air" during dewatering of the felt and paper sheets over suction rolls and suction boxes, which can in turn increase drainage and enhance conditioning of the felt. Because the long floats are bound to the base fabrics, they tend to resist collapse (unlike non-woven designs), and long MD floats on the paper side of the fabric provide relatively few knuckles that can cause marking of the paper sheet.

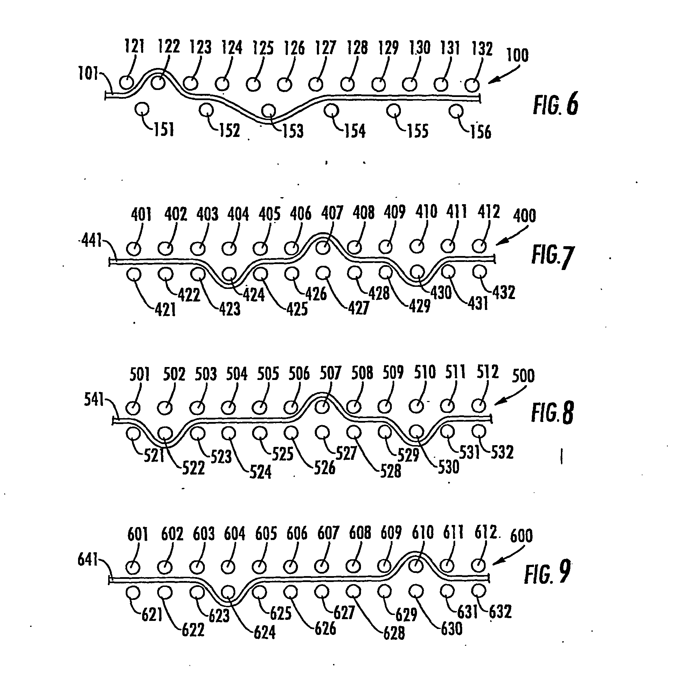

Other duplex fabrics having long MD floats may also be suitable for use with the present invention. For example, **Figure 6** illustrates a typical CMD yarn **101** for use in a duplex fabric **100.** The fabric **100** differs from the fabric **22** in the interweaving of the CMD yarns with the top and bottom MD yarns. As illustrated in **Figure 6****,** CMD yarn **101** passes over a top MD yarn **122,** then passes under three top MD yarns **123-125** and over one bottom MD yarn **152** before passing under bottom MD yarn **153.** CMD yarn **101** then passes above bottom MD yarns **154-156** and **151** and below MD yarns **126-132** and **121.** As with the fabric **22,** the offset between adjacent CMD yarns is typically between three and seven top MD yarns.

**Figure 7** illustrates a duplex fabric **400** that includes twelve top MD yarns **401-412,** twelve bottom MD yarns **421-432,** and twelve CMD yarns (only one CMD yarn **441** is illustrated herein). CMD yarn **441** interweaves with top MD yarns **401-412** in an ''over . 1/under 11" sequence and with bottom MD yarns **421-432** in an "over 5/under 1/over 5/under 1 " sequence. As can be seen in **Figure 7****,** the paper side knuckle formed by CMD yarn **441** as it passes over top MD yarn **407** is substantially centered between the machine side knuckles formed as CMD yarn **441** passes below bottom MD yarns **424** and **430.** In this embodiment, adjacent CMD yarns may be offset from each other as described above.

Variations of the duplex fabric of **Figure 7** are illustrated in **Figures 8** and **9. Figure 8** illustrates a fabric **500** that includes twelve top MD yarns **501-512**, twelve bottom MD yarns **521-532,** and twelve CMD yarns (only one CMD yarn **541** is shown herein). CMD yarn **541** interweaves with the top MD yarns **501-512** in an "over 1/under 11" sequence and with the bottom MD yarns **521-532** in an "over 7/under 1/over 3/under 1" sequence. **Figure 9** illustrates a fabric 600 in which twelve CMD yarns (exemplified by CMD yarn **641)** interweaves with top MD yarns **601-612** in an "over 1/under 11" sequence and with bottom MD yarns **621-632** in an "over 11/under 1" sequence. In these embodiments, adjacent CMD yarns may be offset from one another as described above.

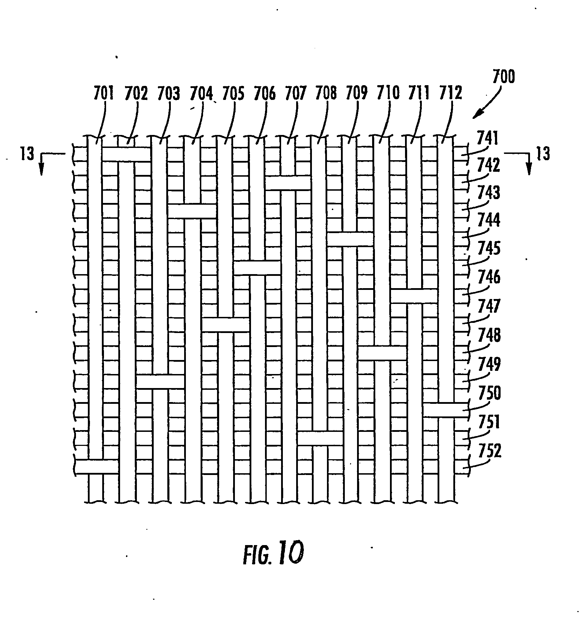

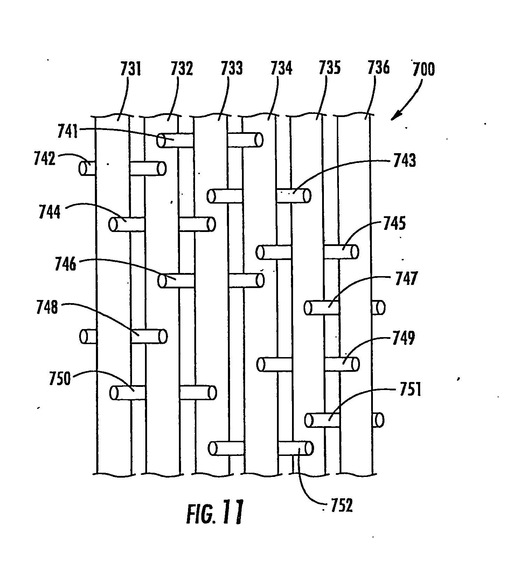

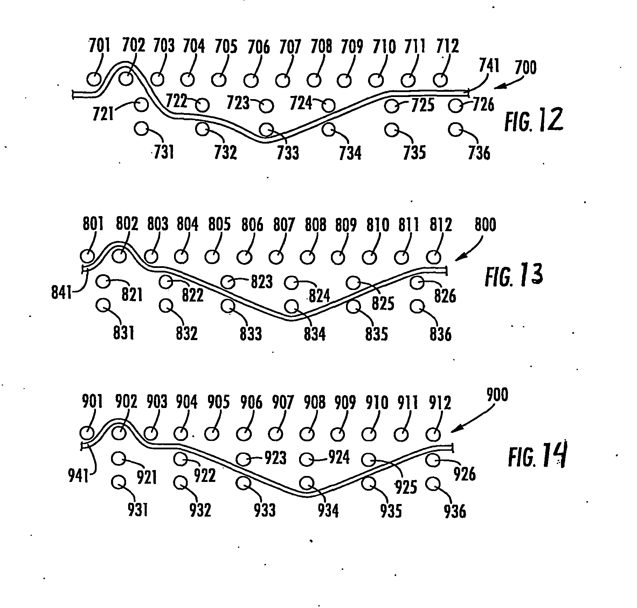

In addition to the duplex fabrics illustrated in Figures **3-9**, press felts of the present invention may also employ triplex fabrics. An example of one such triplex fabric is illustrated in **Figures 10-12** and designated broadly at **700.** The fabric **700** includes twelve top MD yarns **701-712**, six intermediate MD yarns **721-726**, six bottom MD yarns **731-736**, and twelve CMD yarns **741-752**. Each CMD yarn interweaves with the top MD yarns **701-**712 in an "over 1 /under 11 pattern", and with the bottom MD yarns **731-736** in an "over 5/under 1 " pattern. As can be seen in **Figure 12****,** CMD yarn **741** interweaves with the intermediate MD yarns **721-726** in an "over 3/under 3" sequence, with CMD yarn **741** interweaving with a top MD yarn (top MD yarn 702 in **Figures 10** and **12****)** as it passes over intermediate yarns **725, 726, 721** and interweaving with a bottom MD yarn .(bottom MD yarn **733** in **Figures 10** and 12 as it passes below intermediate yarns **722-724**). In an alternative but similar fabric **800** shown in **Figure 13****,** after passing above top MD yarn **802,** CMD yarn **841** passes above only one intermediate yarn **822** before passing below intermediate MD yarns **823-825** and interweaving below bottom MD yarn **834** (CMD yarn **841** also passes below top MD yarns **803-812** and **801,** above bottom MD yarns **831-833** and **835-836,** and above intermediate MD yarns **826** and **821).** For both of these fabric embodiments, adjacent CMD yarns may be offset from each other as described above.

It should be noted in **Figure 13** that the intermediate MD yarns **821-826** and bottom MD yarns **831-836** are vertically stacked (i.e. each intermediate MD yarn **821-**826 is positioned directly above a corresponding bottom MD yarn **831-836),** and that these stacks of yarns are positioned between two top MD yarns **801-812**. **Figure 14** illustrates a fabric **900** in which CMD yarn **941** has the identical interweaving sequence as the fabric **800** of **Figure 13****,** but the intermediate MD yarns **921-926** and the bottom MD yarns **931-936** are not only vertically stacked with each other, but also are vertically stacked below a corresponding top MD yarn **901-912.** Those skilled in this art will appreciate that a fabric may be woven that follows the weaving pattern of fabric **700** with the intermediate and bottom MD yarns vertically stacked below a corresponding top MD yarn, or other fabric embodiments may be woven in which the intermediate and bottom MD yarns are not vertically stacked.

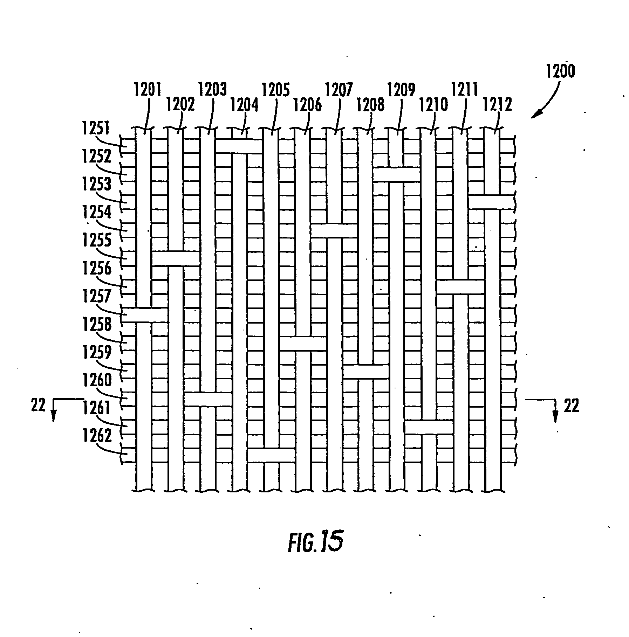

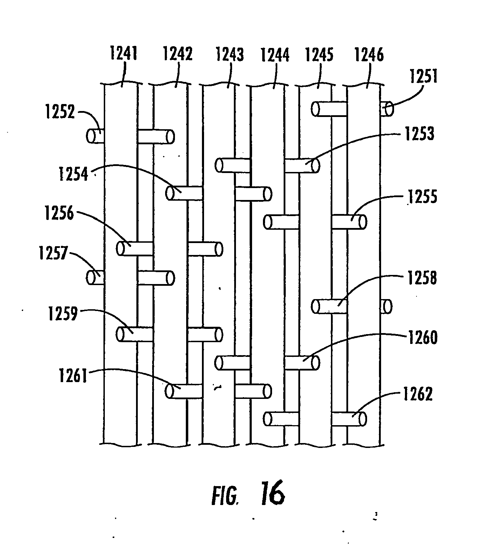

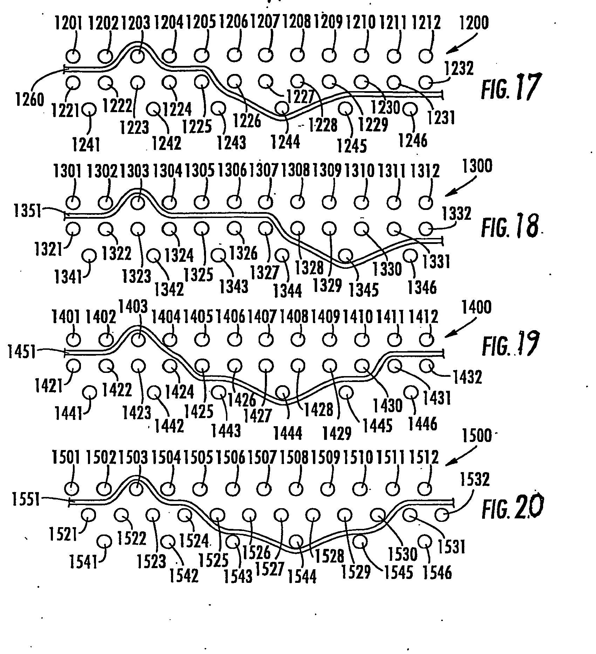

The triplex fabric embodiments of **Figures 10-14** include equal numbers of intermediate and bottom MD yarns; however, fabric embodiments that have equal numbers of top and intermediate MD yarns are contemplated for use with the present invention. **Figures 15-17** illustrate an embodiment of such a triplex fabric designated broadly at **1200.** The fabric **1200** includes twelve top MD yarns **1201-1212,** twelve intermediate MD yarns **1221-1232,** six bottom MD yarns **1241-1246,** and twelve CMD yarns **1251-1262.** In this embodiment, the intermediate MD yarns **1221-1232** are vertically stacked beneath the top MD yarns **1201-1212**. The CMD yarns interweave with the top MD yarns **1201-1212** in an "over 1/under 11 " sequence, with the intermediate MD yarns **1221-1232** in an "over 7/under 5" sequence, and with the bottom MD yarns **1231-1236** in an "over 5/under 1" sequence. Referring to **Figure 17** as an example, after passing over top MD yarn **1203,** CMD yarn **1260** passes over two intermediate MD yarns **1224, 1225;** CMD yarn **1260** then passes below intermediate MD yarns **1226** and **1227** before passing below bottom MD yarn **1244.** CMD yarn **1260** then passes below intermediate MD yarns **1228-1232** before passing above intermediate yarns **1221** and **1222** and traveling up to pass over top MD yarn **1203.** In following this path, CMD yarn **1260** passes over bottom MD yarns **1241-1243** and **1245-1246.**

Another triplex fabric embodiment, designated broadly at **1300,** is illustrated in **Figure 18****.** Like the fabric **1200** described above, the fabric **1300** has twelve top MD yarns **1301-1312,** twelve intermediate MD yarns **1321-1332,** six bottom MD yarns **1341-1346,** and twelve CMD yarns. The fabric **1300** varies from the fabric **1200** described above in the path that the CMD yarn **1351** follows: after passing above top MD yarn **1303,** CMD yarn **1351** passes above four intermediate MD yarns **1324-1327** before passing below intermediate MD yarns **1328-1332** and bottom MD yarn **1345.** **Figure 19** also depicts a similar fabric embodiment. The fabric **1400** shown therein has twelve top MD yarns **1401-1412**, twelve intermediate MD yarns **1421-1432**, six bottom MD yarns **1441-1446,** and twelve CMD yarns. The fabric **1400** differs from the fabric **1300** in that CMD yarn **1451** follows an "over 6/under 6" sequence relative to the intermediate MD yarns. More specifically, CMD yarn **1451** passes above top MD yarn **1403,** above one intermediate MD yarn **1424,** below six intermediate MD yarns **1425-1430** as it passes below bottom MD yarn **1444,** and passes above six intermediate MD yarns **1431, 1432,** and **1421-1424** as it passes above top MD yarn **1403.** **Figure 20** shows a very similar fabric **1500,** in which the twelve intermediate MD yarns **1521-1532** are located below the interstices formed by top MD yarns **1501-1512** rather than being vertically stacked beneath them. Each of the bottom MD yarns **1541-1546** are vertically stacked below one of the top MD yarns **1501-1512**. The CMD yarns (exemplified by CMD yarn 1551) follow the same interweaving pattern with the top, intermediate and bottom MD yarns as does CMD yarn **1451** in the fabric **1400.**

It can be seen that each of the fabric embodiments illustrated and described with respect to **Figures 6-20** have long MD floats. As such, each may provide the type of performance advantages discussed above in connection with the fabric **22** of **Figures 3-5L****.** Also, other base fabrics of different weave patterns having long MD floats may also be employed with the present invention, whether they be duplex, triplex, or quadruplex fabrics.

Typically, the yarns employed in the base fabrics described above may be of any form (e.g., monofilament, multifilament, hybrid yarns, meltable monofilaments, and twists) known to be suitable for use in press felts, although monofilaments or twists are preferred. For the CMD yarns, 3- or 4-ply twisted monofilaments may be particularly suitable (especially 0.1 to 0.3 mm twisted monofilaments), as may monofilaments up to 1.0 mm, spun yarns, multifilaments, core-wrapped yarns or combinations thereof. MD yarns are typically twisted monofilaments, but monofilaments up to 1.0 mm, spun yarns, multifilaments, core-wrapped yarns and combinations may also be particularly suitable for use in the base fabrics of press felts of the invention.

The foregoing is illustrative of the present invention and is not to be construed as limiting thereof. Although exemplary embodiments of this invention have been described, those skilled in the art will readily appreciate that many modifications are possible in the exemplary embodiments without materially departing from the novel teachings and advantages of this invention. Accordingly, all such modifications are intended to be included within the scope of this invention as recited in the claims. The invention is defined by the following claims.

## Claims

1. A papermaker's press felt, comprising:
a base fabric, comprising:
a set of top machine direction (MD) yarns;
a set of bottom MD yarns;
a set of cross machine direction (CMD) yarns interwoven with the top MD yarns and the bottom MD yarns;
the press felt further comprising at least one batt layer attached to the base fabric;
**characterized in that**:
the top MD yarns, bottom MD yarns, and CMD yarns are interwoven in a series of repeat units in which each top MD yarn forms a long MD paper side float that passes above 11 consecutive ones of the set of CMD yarns.

2. The fabric defined in Claim 1, wherein the set of top MD yarns includes twelve top MD yarns per repeat unit.

3. The fabric defined in Claim 1, wherein each of the CMD yearns forms only one paper side knuckle in the repeat unit.

4. The fabric defined in Claim 1, wherein each of the CMD yarns forms two machine side knuckles in the repeat unit.

5. The fabric defined in Claim 1, wherein each of the CMD yarns forms only one machine side knuckle in the repeat unit.

6. The fabric defined in Claim 1, further comprising a set of intermediate MD yarns positioned below the top MD yarns and above the bottom MD yarns.

7. The fabric defined in Claim 6, wherein the set of top MD yarns includes. twelve top MD yarns per repeat unit.

8. The fabric defined in Claim 7, wherein the set of intermediate MD yarns includes six intermediate MD yarns per repeat unit.

9. The fabric defined in Claim 7, wherein the set of intermediate MD yarns includes twelve intermediate MD yarns per repeat unit.

10. The fabric defined in Claim 7, wherein each of the CMD yarns forms only one paper side knuckle in the repeat unit.

11. The fabric defined in Claim 7, wherein each of the CMD yarns forms only one machine side knuckle in the repeat unit.

## Patentansprüche

1. Papiermaschinenpressfilz, Folgendes umfassend:
ein Grundgewebe, das umfasst:
einen Satz oberer Maschinenrichtungsfäden (MD-Fäden);
einen Satz unterer MD-Fäden;
einen Satz Quermaschinenrichtungsfäden (CMD-Fäden), die mit den oberen MD-Fäden und den unteren MD-Fäden verwebt sind;
wobei der Pressfilz darüber hinaus mindestens eine Faserflorschicht umfasst, die an das Grundgewebe gebunden ist;
**dadurch gekennzeichnet, dass**
die oberen MD-Fäden, die unteren MD-Fäden und die CMD-Fäden in einer Reihe von Rapporteinheiten verwebt sind, in denen jeder obere MD-Faden einen langen MD-papierseitigen flottierenden Faden bildet, der über 11 aufeinanderfolgenden Fäden des Satzes CMD-Fäden verläuft.

2. Gewebe nach Anspruch 1, wobei der Satz oberer MD-Fäden zwölf obere MD-Fäden pro Rapporteinheit umfasst.

3. Gewebe nach Anspruch 1, wobei jeder der CMD-Fäden nur eine papierseitige Schlaufe in der Rapporteinheit bildet.

4. Gewebe nach Anspruch 1, wobei jeder der CMD-Fäden zwei maschinenseitige Schlaufen in der Rapporteinheit bildet.

5. Gewebe nach Anspruch 1, wobei jeder der CMD-Fäden nur eine maschinenseitige Schlaufe in der Rapporteinheit bildet.

6. Gewebe nach Anspruch 1, darüber hinaus einen Satz MD-Zwischenfäden umfassend, die unter den oberen MD-Fäden und über den unteren MD-Fäden angeordnet sind.

7. Gewebe nach Anspruch 6, wobei der Satz oberer MD-Fäden zwölf obere MD-Fäden pro Rapporteinheit umfasst.

8. Gewebe nach Anspruch 7, wobei der Satz MD-Zwischenfäden sechs MD-Zwischenfäden pro Rapporteinheit umfasst.

9. Gewebe nach Anspruch 7, wobei der Satz MD-Zwischenfäden zwölf MD-Zwischenfäden pro Rapporteinheit umfasst.

10. Gewebe nach Anspruch 7, wobei jeder der CMD-Fäden nur eine papierseitige Schlaufe in der Rapporteinheit bildet.

11. Gewebe nach Anspruch 7, wobei jeder der CMD-Fäden nur eine maschinenseitige Schlaufe in der Rapporteinheit bildet.

## Revendications

1. Feutre de presse d'une machine de fabrication de papier, comprenant :
un tissu de base, comprenant :
un ensemble de fils supérieurs dans le sens machine (MD) ;
un ensemble de fils inférieurs MD ;
un ensemble de fils dans le sens travers (CMD) entrelacés avec les fils supérieurs MD et les fils inférieurs MD;
le feutre de presse comprenant en outre au moins une couche de nappage fixée sur le tissu de base;
**caractérisé en ce que**:
les fils supérieurs MD, les fils inférieurs MD et les fils CMD sont entrelacés dans une série d'unités de répétition dans lesquelles chaque fil supérieur MD forme un long flotté du côté du papier MD qui passe sur 11 fils consécutifs de l'ensemble de fils CMD.

2. Tissu selon la revendication 1, dans lequel l'ensemble de fils supérieurs MD comprend douze fils supérieurs MD par unité de répétition.

3. Tissu selon la revendication 1, dans lequel chacun des fils CMD ne forme qu'un seul croisement du côté du papier dans l'unité de répétition.

4. Tissu selon la revendication 1, dans lequel chacun des fils CMD forme deux croisements du côté de la machine dans l'unité de répétition.

5. Tissu selon la revendication 1, dans lequel chacun des fils CMD ne forme qu'un seul croisement du côté de la machine dans l'unité de répétition.

6. Tissu selon la revendication 1, comprenant en outre un ensemble de fils intermédiaires MD positionnés au-dessous des fils supérieurs MD et au-dessus des fils inférieurs MD.

7. Tissu selon la revendication 6, dans lequel l'ensemble de fils supérieurs MD comprend douze fils supérieurs MD par unité de répétition.

8. Tissu selon la revendication 7, dans lequel l'ensemble de fils intermédiaires MD comprend six fils intermédiaires MD par unité de répétition.

9. Tissu selon la revendication 7, dans lequel l'ensemble de fils intermédiaires MD comprend douze fils intermédiaires MD par unité de répétition.

10. Tissu selon la revendication 7, dans lequel chacun des fils CMD ne forme qu'un seul croisement du côté du papier dans l'unité de répétition.

11. Tissu selon la revendication 7, dans lequel chacun des fils CMD ne forme qu'un seul croisement du côté de la machine dans l'unité de répétition.
